# EUROPEAN PATENT SPECIFICATION

(11) **EP 2 154 121 B1**
(45) Date of publication and mention of the grant of the patent: **29.07.2015**
(21) Application number: 08748685.8
(22) Date of filing: 29.04.2008
(51) Int. Cl.: C05F 11/08

(54) **BIOFERTILISER COMPOSITION**
BIODÜNGERZUSAMMENSETZUNG
COMPOSITION BIOFERTILISANTE

(30) Priority: 30.04.2007 CU 20070092
(43) Date of publication of application: 17.02.2010
(73) Proprietor: Centro De Ingenieria Genetica Y Biotecnologia, Ciudad De La Habana 10600 (CU)
(72) Inventor: MENA CAMPOS, Jesús, Camagüey 70 500 (CU); PIMENTEL VÁZQUEZ, Eulogio, Camagüey 70 800 (CU); MARÍN BRUZOS, Marieta, Camagüey 70 800 (CU); HERNÁNDEZ GARCÍA, Armando, Tomás, Camagüey 70 100 (CU); SÁNCHEZ ORTIZ, Ileana, Camagüey 70 800 (CU); RAMÍREZ NÚÑEZ, Yamilka, Camagüey 70 300 (CU); GONZÁLEZ BLANCO, Sonia, Ciudad De La Habana 11 600 (CU); GARCÍA SIVERIO, Marianela, Ciudad De La Habana 10 600 (CU); BORROTO NORDELO, Carlos, Guillermo, Ciudad Habana 11 600 (CU)
(74) Representative: Hatzmann, Martin
(86) International application number: PCT/CU2008/000002
(87) International publication number: WO 2008/131699

(56) References cited:
- EP-A2- 1 356 733
- US-A1- 2002 119 123
- US-A1- 2007 142 226
- JESÚS MENA CAMPOS ET AL.: "Aislamiento y determinación de cepas bacterianas con actividad nematicida. Mecanismo de acción de C. Paurometabolum C-924 sobre nemátodos" BIOTECHNOLOGÍA APLICADA, vol. 20, no. 4, 2003, pages 248-252, XP002503342 cited in the application
- DATABASE WPI Week 198708 Thomson Scientific, London, GB; AN 1987-052994 XP002503345 & JP 62 007787 A (RIOKO CORP LTD) 14 January 1987 (1987-01-14)
- ANONYMOUS: "Tsukamurella paurometabola" DSMZ BACTERIAL NOMENCLATURE UP-TO-DATE, [Online] XP002503343 Retrieved from the Internet: URL:http://www.dsmz.de/microorganisms/bact erial_nomenclature_info.php?genus=TSUKAMUR ELLA&show_all_details=1> [retrieved on 2008-11-10]
- DATABASE BIOSIS [Online] BIOSCIENCES INFORMATION SERVICE, PHILADELPHIA, PA, US; 1997, ARKHIPCHENKO I A: "The expediency of using the sludge biomass as a microbial fertilizer" XP002503344 Database accession no. PREV199799547859 & DOKLADY ROSSIISKOI AKADEMII SEL'SKOKHOZYAISTVENNYKH NAUK, vol. 0, no. 1, 1997, pages 35-37, ISSN: 1068-3674

## Description

### Technical Field

The present invention relates to the field of soil microbiology and relates to the application of microbial biofertilizers that are able to favor and stimulate growth in plants without affecting the environment.

### Prior art

Biofertilizers are defined as products based on microorganisms that usually live in the soil. By increasing their population through artificial inoculation, the response is that this microorganisms boost their biological activity, thus supplying the plants with important nutrients that enhance their growth. In addition, microorganisms are credited with supplying plants with hormonal substances that are essential to their development (Martinez J. S. et al., 1985. "Manual Práctico de Microbiologia". Ed: Pueblo y Educación, Cuba).

Several studies have been carried out on this theme, particularly about a group of well known microorganisms that will be analyzed hereafter:
It is estimated that the symbiotic fixation of nitrogen, inherent to the *Rhizobium,* is one of the most feasible ways to recover nitrogen and return to the ecosystem. It has been figured out that 175 tons of nitrogen a year are biologically fixed; out of which a 70 % goes to the soil (Burity HA et al., 1989. Estimation of nitrogen fixation and transfer from alfalfa to associated grasses in mixed swards under field conditions. Plant and Soil, 114:249-255 Fifty percent of this fixation comes from nodular associations as those caused by *Rhizobium* (Carrera M et al., 2004. "Nodulación natural en leguminosas silvestres del Estado de Nuevo León").

The symbiotic fixation of nitrogen takes place when the bacteria (*Rhizobium*) recognizes its host causing its infection through the radical hairs and in the matrix of the cortical cells, inducing thus an accelerated meiosis and mitosis. That leads to a hypertrophied tissue: "the nodule", a typical structure of the leguminous roots. Inside this nodule the *Rhizobium* loses its cellular wall and becomes a bacteroide which due to its nitrogenase enzyme action, fixes nitrogen (N₂), turning it into ammonium (NH₃), this latter being transferred to the vegetal ribosome for the proteins synthesis. At the same time, by means of the photosynthesis, the CO₂ is reduced in carbohydrates by the leguminous plant, which will serve as a source of carbon and energy for *Rhizobium,* hence it is kept active in the nodule covering thus the plants necessity of nitrogen (Bauer T, 2001. "Microorganismos Fijadores de Nitrógeno: familia Rhizobiaceae." In: http://www.microbiologia.com.ar/suelo/rhizobium.html). This constitutes the most elaborate and efficient association between plants and microorganisms. That is why it has been the most largely studied ever since. Bacteria of *Azotobacter* genus, make up a special nitrogen fixing microorganisms group. Inasmuch as they are the only unicellular and apparently capable of fixing nitrogen in aerobial conditions (Andresson AJ et al, 1994. "Efecto de la inoculación con Azotobacter y MVA en vitroplantas de name (Dioscorea alata)" Cultivos Tropicales, 15 (3): 66). From the historical point of view, it is the *Azotobacter* indeed, the microorganism most widely used in agriculture. The first application of this bacterium dates back to 1902, winning large utilization during the decades of the 40's, 50's and 60's, particularly in the eastern European countries (González J and Lluch C., 1992. "Biología del Nitrógeno. Interacción Planta-Microorganismo". Ed. Rueda, Madrid, España).

Other biofertilizing microorganisms are made up of various strains from *Pseudomonas* genus, which contribute to the enhancing of the availability of the attainable phosphorus (Lawrence A.R., 2002. Biofertilizers for rice cultivation. Agricultural Universities of India. In: http://www.hinduonnet.com/thehindu/seta/2002/04/04/stories/2002040400120400.ht m).

The combined application of three species of bacteria: *Bacillus pumilus* Meyer and Gotheil, *Bacillus subtilis* (Ehrenberg) Cohn and *Curtobacterium flaccumfaciens* (Hedges) Collins and Jones, to cucumber (*Cucumis sativus*, L.) seeds, provided better results as compared to the inoculation of each one by separate (Raupach GS and Kloepper JW., 1998. Mixtures of plant growth-promoting rhizobacteria enhance biological control of multiple cucumber pathogens. Phytopathology, 88:1158-1164). The positive effect of micorrizogen fungus strains, combined with *Azotobacter* sp. and earth worm's humus, over the growth of coffee seedlings (*Coffeea arabica*) has been reported. The combination of *Glomus fasciculatum* and *Glomus peuú* with *Azotobacter* turned to be superior than the control treatments (Sánchez C. et al., 1994. "Utilización de las Micorrizas VA y Azotobacter sp. en la producción de posturas de Coffea arabica L." Cultivos Tropicales, 15 (3): 69).

While cultivating tomatoes, chard, lettuce, french bean and radish, these were inoculated with *Glomus* sp. and *Azotobacter,* positive results corroborated the effectiveness of this combination which clearly shows that both microorganisms reacted in a synergistic way (when they were added simultaneously) (Terry E. et al., 2000. "Efectividad de Azotobacter chroococcum y HFMA en diferentes cultivos hortícolas en condiciones de organoponico". XII Seminario Científico, Programa y Resúmenes. La Habana. INCA, 117).

The nematocidal activity of *Tsukamurella paurometabola* strain C-924, has been previously described as a useful control against both animal and plant parasites (Mena J. et al. Patent E P. 0774906 B1 and EP 1 356 733 A2). The biological control of nematodes is an effective alternative to the use of chemical pesticides in agriculture. The action mechanism of this bionematocide, has been related to the combined effect of desulfurase and quitinase activities over the nematodes and their eggs. Up to now, no other beneficial influence over the crops was known, other than the one derived from its direct action upon nematodes.

Although the quick effect of chemical fertilizers over the plant growing is a fact, they cause nutritional disorders on plants plus collateral negative effects on the soil. Because of this the obtaining of new biofertilizers is a must. They aim at promoting the growth and development of plants without bringing about undesired harmful consequences, either to the environment or to people.

### DETAILED DESCRIPTION OF THE INVENTION

The present invention has come to solve the problem mentioned above, providing a biofertilizer composition that comprises at least one strain of *Tsukamurella paurometabola,* or a mutant derived from it, or a metabolite derived from such a strain, in an appropriate carrier as specified in the claims. All this has the effect of stimulating the growth and phenological development of plants. Furthermore, this already said composition contributes to enhance the soil fertility, creating the conditions for a more favorable plants development.

In one of its basic embodiment, the biofertilizer composition invention comprises the bacteria known as *Tsukamurella paurometabola* strain C-924 (Mena J. et al., 2003. Biotecnologia Aplicada 20(4):248-252) whose capacity to positively influence the phenology of various species of cultivated plants, is fairly demonstrated. Consequently, based on the obtained results, it is possible to set up a method to stimulate the plants development by means of a biofertilizer to be used in agriculture which helps plants to optimize the acquisition of organic matter, favoring thus, the appropriation of nitrogen and phosphorus, elements related to the activity of *T. paurometabola* strain C-924 on the soil or either in a natural or artificial substrate. Eventually, the application of chemical fertilizers is reduced or eliminated. In spite of the immediate effect that the fertilizers exert on the plant development, they cause other nutritional disorders and unwanted side effects.

The bio-stimulating effect of *T. paurometabola* on plants is generated by the production of ammoniac (NH₃), associated to the growth of this bacteria interacting with the organic matter and amino acids present on the soil or substrate where plants are grown, or on the organic matter and amino acids added to any mixture, applied simultaneously or in combination with this bacterium. At the same time, this microorganism takes part in the solubilization of phosphorus, thus changing it from non-absorbable to absorbable by the plants.

The application of *T. paurometabola* strain C-924 to the soil, over a substrate (natural or artificial) or an organic matter carrier and/or amino acids, is done by means of a cellular suspension having between 1.0x10⁷ colony forming units (cfu)/ml and 5.0x10¹² cfu/ml or by a concentrated powder of an approximately 10¹² CFU/g of composition.

The composition containing *T. paurometabola* strain C-924 (carried by organic matter, amino acids and other organic carriers), applied in combination with other biofertilizers and bio-stimulators, or independently, enhances the plants development in manner similar to or even better than other plants growth promoting microorganisms used in agriculture.

With the results obtained, a method as defined in the claims can be established to stimulate the growth of plants based on the use of a biofertilizer agent for agricultural use that optimizes the acquisition of organic matter by the plants, which favors the assimilation of nitrogen and phosphorus, elements linked to the activity of *T. paurometabola* strain C-924 applied either to the soil or to a natural or artificial substrate.

In another embodiment of this invention, the metabolite comprised in the biofertilizer composition can be obtained either in a natural, recombinant or synthetic manner. The bio-fertilizing composition of said invention may have several kinds of carriers, such as: an organic fertilizer, a pre-packed soil, a seed coverer, a powder, a granulated formulation, a nebulizer, a liquid, a suspension, or any of the above mentioned variants in an encapsulated form.

In another implementation of this invention, the *T. paurometabola* strain is combined or mixed with other biofertilizing microorganisms, such as: *Bacillus subtilis, Rhizobium leguminosarum, Azotobacter chroococcum, Pseudomonas fluorescens, Glomus fasciculatum* and *Glomus clarum,* or a mutant derived from such organisms, as well as any other active principle or metabolite obtained from such strains, either by a natural, recombining or synthetic manner, in an adequate carried. Is also an object of the present invention a method to stimulate the growth of plants, characterized by comprising a) to obtain a biofertilizer agent that comprises a culture of a *Tsukamurella paurometabola* strain or a metabolite derived from such strain, obtained by a natural, recombinant or synthetic way; and b) contacting the soil or either a natural or an artificial substrate with an effective amount of such a biofertilizer or of a metabolite from derived from this strain. In an embodiment of the invention, the method described before is characterized because the strain of *Tsukamurella paurometabola* is the strain C-924. In the method for stimulating the growth of the plants. The effective amount of the biofertilizer agent is applied on the soil or substrate in an aqueous suspension in a concentration of approximately between 10⁶ and 10⁹ cfu per milliliter of suspension, and the biofertilizer agent is applied at least once to the soil or mixed with the substrate.

The biofertilizer agent and the method of stimulating the plant growth of the present invention is effective either for food producing plants employed with the objective of obtaining food for human beings, as fruits and vegetables, or for plants obtained for feeding animals, such as pasture, cereals, etc. It is also applicable to ornamental plants.

### BRIEF DESCRIPTION OF THE FIGURES

**Figure 1****.** Kinetics of the ammoniac formation during the culture of *T. paurometabola* C-924 in a 5 L bioreactor. The working temperature was of 28 °C and the initial pH was of 7.0 with a 500 rpm shake.
**Figure 2****.** Correlation resulting from the accumulated ammoniac and the biomass dry weight produced in the 5 L bioreactor under the said conditions.

### Examples

### Example 1. Ammoniac produced by the T. paurometabola strain C-924, cultivated in a 5 L bioreactor.

Once the conditions were created, the process of cultivating *T. paurometabola* strain C-924 in a 5 L bioreactor was initiated. The temperature was set up at 28 °C at a 500 rpm agitation speed. The culture medium samples were taken at different time intervals during the fermentation process, (2, 4, 6, 8, 10, 12 and 13 hrs.). Five mL from each sample (tripled) were centrifuged and filtered through a 0,2 µm filter. The filtered mixture was submitted to the ammonium analysis according to Nessler's Reagent Method. For its spectrophotometer determination, a Pharmacia Biotech spectrophotometer was used, with a wave length of 450 nm.

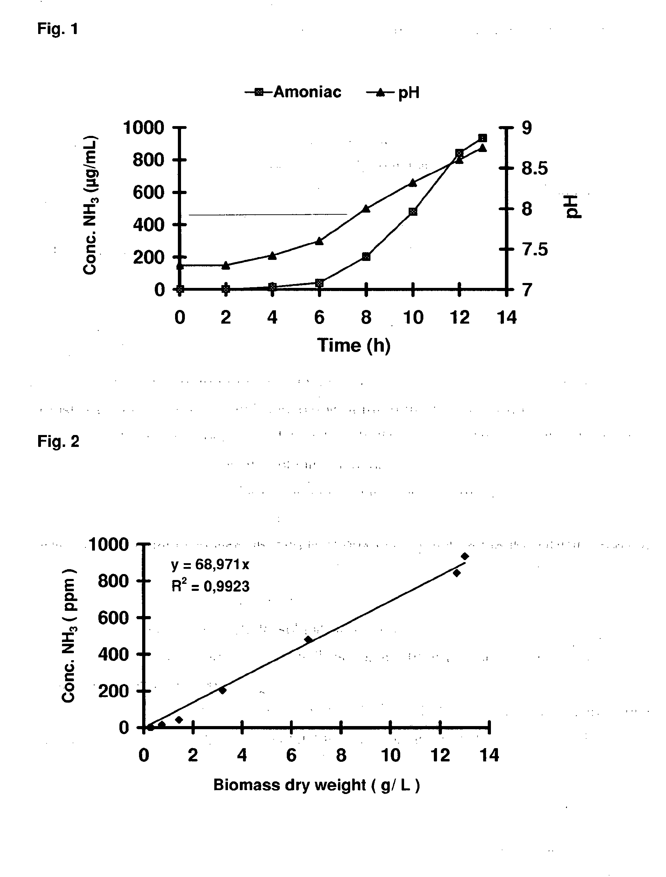

The ammoniac production during the culture of the *Tsukamurella paurometabola* strain C-924 is represented in Figure 1, where the kinetics in the formation of ammoniac in the 5 L bioreactor (up to 14 hours of culture) is shown. The working temperature was of 28 °C, and the initial pH was of 7.0. The ammoniac production, it was noted, was associated to C-924 growth, which shows the microorganism oxidative deamination in a constitutive manner in the presence of amino-acidic substrate. The pH increase (in time) was noticeable nearly reaching the value of 9.0, and NH₃ concentration of up to 934 µg/ml. Hence, the *T. paurometabola* strain C-924 can be considered as a high ammoniac producer as compared to other microorganisms (Hoffmann T., 1998. Ammonification in Bacillus subtilis utilizing dissimilatory nitrate reductase is dependent on resDE. Journal of Bacteriology, vol. 180,1: 186-189; Takahasi N., 2000. Metabolic Pathways for cytotoxic end product formation from glutamate and a spartate containing peptides by Porphyromonas gingivalis. Journal of Bacteriology, vol. 182, 17: 4704-4710).

The production of NH₃ should be sustained by the oxidative deamination process suffered by the amino acids that take part in the culture medium (Vanhooke JL et al., 1999. Phenylalanine dehydrogenase from Rhodococcus sp. M4: high-resolution X-ray analysis of inhibitory ternary complexes reveal key features in the oxidative deamination mechanism. Biochemistry, 38: 2326-2329; Paustian T., 2001. Microbiology Webbed Out. University of Wisconsin, Madison). It is important to point out that by means of this process, the amino acids are deaminated yielding ammoniac and a carbon residue (an α-cetoacid), as more energetic carbon than assimilable nitrogen is needed usually an accumulation of ammoniac takes place in the medium (Salle A J, 1966. Bacteriología. Edición Revolucionaria, La Habana, Cuba). Presumably, this mechanism fits in to what has happened in the process of accumulation of ammoniac by the *Tsukamurella pauromrtabola* strain C-924.

In Figure 2 is shown the experimental correlation obtained between the levels of ammoniac in the extracellular medium and the cellular concentration expressed as a dry weight for the biomass produced in the 5 L bioreactor. A lineal relation occurs between both variables, which indicate a production of NH₃ associated to the microorganism growth whose speed is constant in respect to the biomass concentration.

### Example 2. Solubilization of phosphate by Tsukamurella paurometabola strain C-924.

Phosphorus is one of the most crucial nutrients for the development of plants, but in most occasions it is found in an insoluble form in the soil. A high percentage of the inorganic phosphate applied to the soil as fertilizer is rapidly immobilized after the application and is kept by the plants in a non available manner. Consequently, releasing those insoluble forms of phosphate will be important to increase the availability of this element in the soils.

With experimental purposes, the strain C-924 was inoculated in the NBRIP medium (Nautiyal C., 1999. An efficient microbiological growth medium for screening phosphate solubilizing microorganisms. FEMS Microbiology Letters 170: 265-270), useful in determining phosphate solubilizing microorganisms. It was incubated at 30 °C during 10 days. Having passed all these days, the transparent halo characteristic of this medium appeared.

It has been demonstrated that several isolations that show no halo in the solid medium or that make up a very small halo are able to solubilize insoluble phosphate in liquid mediums (Leyval C. and Barthelin J.,1999. Plant soil, 17: 103-110). For this reason, the trial was carried out in a liquid medium. As a positive control, *Pseudomonas aeruginosa* ATCC 25922 was employed.

The two strains were inoculated by separate in the NBRIP liquid medium, and they were incubated at 30 °C at 180 rpm shake for five days. In addition, a sterile (not inoculated) medium was used in order to validate the trial. Samples were analyzed every 24 hours. The cultures of each sample were centrifuged at 3000 rpm for 25 minutes and the supernatant was filtered with a 0.45 µm filter. For each case, the concentration of soluble phosphate was established, the Fiske and Subbarow method was used (Fiske H and Subbarow Y, 1925. The colorimetric determination of phosphorus. J. Biol. Chem. 66: 375-400). Data are shown on Table 1. Although both microorganisms showed the capacity to solubilize phosphates, *Tsukamurella paurometabola* strain C-924 proved to be more efficient.

**Table 1. Results from the measurement of phosphate solubilization in studied strains.**

| Time (days) | Strain C-924 | Strain ATCC 25922 |
|---|---|---|
| 0 | 0.00 | 0.00 |
| 1 | 26.52 | 25.57 |
| 2 | 39.34 | 33.22 |
| 3 | 75.16 | 38.20 |
| 5 | 95.19 | 44.40 |

### Example 3. Effect of biofertilizer composition which comprises T. paurometabola C-924 upon the development and growth of plantain plants (Musa sp. hybrid, cultivar "Macho").

A "Middling-Carbonated Soft Brown Soil" was chosen (Instituto de Suelos, 1999. "Nueva clasificación genética de los suelos de Cuba". Ministerio de la Agricultura. Editorial AGRINFOR, Cuba). The said soil was sieved through a 0.5 cm (diameter) mesh to eliminate undesirable particles. A 5% of earth worm humus was applied to the soil in order to enhance the soil organic content over the 3% of labile organic matter and a 12% of total organic matter.

Later, pots of 15 cm top diameter and 1.0 L of capacity were filled, to be used in the biological activity experiments. Plantain (*Musa* sp. hybrid, cultivar "Macho") plantlets from *in vitro* tissue culture were planted in said pots. For each of the following treatments, 10 replicas were used:
1- Control: Luria Bertani medium (LB) + H₂O at a 1/1000 concentration, applied to a 50 mL/pot ratio.
*2- Bacillus subtilis* strain F16/95 [set to a 1x10⁷ spores/mL], applied to a 50 mL/pot ratio.
3- *Tsukamurella paurometabola* strain C-924 [set to 1x10⁷ cfu/mL], applied to a 50 mL/pot ratio.

After three months of the experiment start, the final evaluation was made targeting these parameters: foliage weight, roots weight and the total sum, given in grams. The experiment was carried out at a greenhouse under semi-controlled conditions. The Analysis of Variance (ANOVA) was applied to the data resulting from the weights. In order to find out the treatments where the significant differences lied upon (p<0.05), Tukey's multiple ranges test was applied. Besides, the program SYSTAT 7.0 for Windows was applied to perform the statistic calculations. Three months after the transplantation and applying the treatments, the results were as follow:

**Table 2. Mean of the measurements in 10 plants.**

| **Weight (grams)** | **Control** | **C-924** | **F 16/95** |
|---|---|---|---|
| Roots | 3.3^{b} | 26.8^{a} | 30^{a} |
| Foliage | 10.9^{b} | 47.9^{a} | 59.4^{a} |
| Total | 14.2^{b} | 74.7^{a} | 89.4^{a} |

| | | | |
|---|---|---|---|
| Mean values with different letters differ among each other significantly, according to Tukey's multiple range test, for p≤0.05. | | | |

Both microorganisms used were able to boost the plantain plants growth. Differences in growth between the treatments with *T. paurometabola* strain C-924 and *Bacillus subtilis* strain F16/95 (the positive control bacteria) were not noticed. The latter is well known for enhancing plants growth (Mc Spadden B B and Fravel D R, 2002. Biological Control of Plants Pathogens: Research, Commercialization, and Application in the USA.In: http://www.phcmexico.com.mx/apsnet_biological control.html).

### Example 4. Effect of Tsukamurella paurometabola strain C-924 upon the development and growth of banana plants (Musa sp. hybrid, cultivar Cavendish).

A "Middling-Carbonated Soft Brown Soil" was chosen (Instituto de Suelos, 1999. "Nueva clasificación genética de los suelos de Cuba". Ministerio de la Agricultura. Editorial AGRINFOR, Cuba). Said soil was sieved through a 0.5 cm (diameter) mesh to eliminate undesirable particles. A 5% of earth worm humus was applied to the soil in order to enhance the soil organic content over the 3% of labile organic matter and a 12% of total organic matter.

Later, pots of 15 cm top diameter and 1.0 L of capacity were filled, to be used in the biological activity experiments. Banana (*Musa* sp. hybrid, cultivar Cavendish) plantlets from *in vitro* tissue culture were planted in said pots. For each of the following treatments, 10 replicas were used:
1- Control: Luria Bertani medium (LB) + H₂O at a 1/1000 concentration, applied to a 50 mL/pot ratio.
2- *Bacillus subtilis* strain F16/95 [set to a 1x10⁷ spores/mL], applied to a 50 mL/pot ratio.
3*- Tsukamurella paurometabola* strain C-924 [set to 1x10⁷ cfu/mL], applied to a 50 mL/pot ratio.

After five months of the experiment start, the final evaluation was made targeting these parameters: foliage weight, roots weight and the total sum, given in grams.

The experiment was carried out at a greenhouse under semi-controlled conditions. The Analysis of Variance (ANOVA) was applied to the data resulting from the weights. In order to find out the treatments where significant differences lied upon (p<0.05), Tukey's multiple ranges test was applied. Besides, the program SYSTAT 7.0 for Windows was applied to perform the statistics calculations. Five months after the transplantation and applying the treatments, the results were as follow:

**Table 3. Means of measurements in 10 plants.**

| **Weight (grams)** | **Control** | **C-924** | **F 16/95** |
|---|---|---|---|
| Roots | 25.06 ^{b} | 31.34 ^{a} | 36.04 ^{a} |
| Foliage | 42.48 ^{b} | 65.12 ^{a} | 63.32 ^{a} |
| Total | 67.54 ^{b} | 96.46 ^{a} | 99.36 ^{a} |

| | | | |
|---|---|---|---|
| Mean values with different letters differ among each other significantly, according to Tukey's multiple ranges test, for p≤0.05. | | | |

As in Example 3, the two microorganisms being applied reported a significant growth in the banana plants. No differences between the treatments with strain C-924 and with control strain F 16/95 were reported.

### Example 5. Effect of Tsukamurella paurometabola C-924 upon the growth and development of soy beans plants (Glycine max). (not part of the invention)

A "Ferralithic Red" soil was chosen (Instituto de Suelos, 1999. "Nueva clasificación genética de los suelos de Cuba". Ministerio de la Agricultura. Editorial AGRINFOR, Cuba). The said soil was sieved through a 0.5 cm (diameter) mesh to eliminate undesirable particles. This soil had a content of 2.6% of labile organic matter and a 10.7% of the total organic matter.

Pots of 15 cm top diameter and 1.0 L of capacity were filled, to be used in the biological activity experiments. Pre-germinated soy beans seeds were used (*Glycine max*)*.* The seeds were planted by numbers of three in each pot. Twenty pots with three plants each were employed with the following treatments:
1. Control: Luria Bertani medium (LB) + H₂O at a 1/1000 concentration, applied to a 100 mL/pot ratio.
*2. Tsukamurella paurometabola* strain C-924 [set to 1x10⁶ cfu/mL], applied to a 100 mL/pot ratio.

The treatments were applied a day prior to the sowing of the pre-germinated seeds. Then, seven days after sowing them, an evaluation was made testing the following parameters: the roots, stems and leaves weight were monitored as well as the total weight of the plants (given in grams). The plants from 10 pots were evaluated (30 in all).

The experiment was carried out at a greenhouse under semi-controlled conditions. The Analysis of Variance (ANOVA) was applied to the data resulting from the weights. In order to find out the treatments where the significant differences lied upon (p<0.05), Tukey's multiple ranges test was applied. Besides, the program SYSTAT 7.0 for Windows was applied to perform the statistic calculations.

The resulting mean values (per plants) taken from the fresh weights for each evaluation and its significance are shown in Table 4.

**Table 4. Mean values from the measurements in 30 plants.**

| **Treatment** | **Roots weight (g)** | **Stems weight (g)** | **Leaves weight (g)** | **Plant weight (g)** |
|---|---|---|---|---|
| Control | 0.388 | 0.783 | 0.564 | 1.735 |
| C-924 | 0.367 | **1.066** | **0.680** | **2.113** |

After seven days of growth, significant differences between the plants were noticed, such as: increase of the stems fresh weight as in the leaves and the overall weight of plants. Consequently, the conclusion leads to the statement that the treatment with the composition containing the strain C-924, yields satisfactory results on the enhancing of the growth and development of plants.

### Example 6. Effect of the Tsukamurella paurometabola strain C-924 upon the tomato plants growth (Lycopersicon esculentum Mill. variety FA-180) in seedlings conditions.

Accordingly, a greenhouse adapted to gardening seedlings was employed. As a substrate for the seedling, a mixture of earth worm humus (50%), turf (25%) and Zeolite (25%) was used.

Two treatments for the substrate were applied to the soil, three days before planting the pre-germinated seeds:
a) A treatment with a concentrated suspension (5.0x10¹¹ cfu/mL) of *T. paurometabola* strain C-924 at a ratio of 20 mL per 100 kg of substrate. A manual spray pump was used with an addition of 10 L of water to help make homogeneous the bacteria suspension distribution.
b) Control treatment wherein only water was used.

On day 22 of their sowing, when the plantlets were ready to be transplanted, the height of 40 plants from each treatment was measured. The plants were taken at random, by 10 from different places within the seed bed. Table 5 shows the average height values per plants. Significant differences (p≤0.05, ANOVA) were appreciated between the sizes obtained in both treatments, a clear influence of the strain C-924 is observed. The enhancing effect of the said strain was substantial for the tomato seedlings on the high organic matter substrate.

**Table 5. Mean of measurements in 40 plants.**

| **Seedlings treatments** | **Height means on day 22 (cm)** |
|---|---|
| C-924 | 16.22 |
| Control | 13.57 |

### Example 7. Effect of the Tsukamurella paurometabola strain C-924 over tomato (Lycopersicon esculentum Mill. variety FA-180) plants growth and other phenological parameters under field conditions.

A greenhouse (0.09 ha surface) with a "Non Carbonated Brown Soil" (Instituto de Suelos, 1999. "Nueva clasificación genética de los suelos de Cuba". Ministerio de la Agricultura. Editorial AGRINFOR, Cuba) was used. The said soil had a labile matter content of 3% and a total organic matter of 12%. Thereafter, the greenhouse was allotted into 16 plots where an experimental design was set up with four treatments and the same amount of replicas. The procedure was as follow:
- Treatment with a concentrated suspension (5.0x10¹¹ cfu/ml) of *T. paurometabola* strain C-924, at a ratio of 10L/ha, applied through the irrigation system. This was done seven days before their transplantation.
- Treatment with a concentrated suspension (5.0x10¹¹ cfu/ml) of *T. paurometabola* strain C-924, at a ratio of 4L/ha, applied through the irrigation system. This was done seven days before their transplantation.
- Chemical treatment: Basamid (Dazomet) at 600 kg/ha.
- Control (no chemical or biological treatment at all).

The two treatments with strain C-924 were done by means of an aiding pump attached to the drop irrigation system, with a total irrigation output of 1 L per square meter according to the parameters established for irrigation in greenhouses (Casanova A., 1999. "Guía técnica para la producción protegida de hortalizas en Casas de Cultivo tropical con efecto de sombrilla". MINAGRI, Instituto de Investigaciones Hortícolas "Liliana Dimitrova", Cuba).

Fifteen days after transplantation, the measuring and counting proceedings were done (10 plants per plot) including the following parameters:
- Plants height (cm).
- Number of folioles per plant.
- Width of the stem footing (mm).
- Number of flower clusters per plant.
- Number of flowers per plant.

Table 6 shows a summary of results. In fact, it was clearly established that the height, the number of folioles, and the number of flowers were significantly superior in both treatments (with two different doses) with the strain C-924. Therefore, the enhancing properties of this biofertilizer agent are beyond any doubt.

**Table 6. Mean values of measurements applied to 10 plants.**

| **Treatment** | **Height (cm)** | **Folioles** | **Width (mm)** | **Clusters** | **Flowers** |
|---|---|---|---|---|---|
| C-924,10 Uha | 36.39 ^{a} | 8.78 ^{a} | 10.33 ^{a} | 1.15 ^{ab} | 653 ^{ab} |
| C-924, 4Uha | 36.03 ^{a} | 9.08 ^{a} | 9.83 ^{ab} | 1.33 ^{a} | 8.13 ^{a} |
| Control | 25.42 ^{b} | 7.50 ^{b} | 9.70 ^{ab} | 1.03 ^{bc} | 4.58 ^{c} |
| Bas. 600 Kg/ha | 29.10 ^{b} | 7.85 ^{b} | 8.65 ^{b} | 0.93 ^{c} | 5.23 ^{b} |

Mean values with different letters for each parameter differ significantly according to Tukey's test, (p≤ 0.05 ).

### Example 8. Comparison and interaction of Tsukamurella paurometabola strain C-924 with Rhizobium leguminosarum in the cultivation of beans (Phaseolus vulgaris L.)

Each treatment included five replicas and four plants per replica. One seed per bed was planted, reaching four beds per pot with a depth of 3 cm in the 1 L capacity pots. For each experimental unit or pot, 1.2 kg of "Carbonated Brown Soil" (Instituto de Suelos, 1999. "Nueva clasificación genética de los suelos de Cuba". Ministerio de la Agricultura. Editorial AGRINFOR, Cuba) was used, with a labile organic matter of 3.74% and a total organic matter of a 14,2%, plus soluble phosphorus:19.14 mg of P₂O₅/100 g of soil.

The experiment was carried out in a greenhouse under semi-controlled conditions. The treatments were as follow:
1- Control with no inoculation at all.
2- *T. paurometabola* strain C-924 inoculated seven days before planting and seven days after planting the crops. The applied dose was of 100 mL per pot with a concentration of 1x10⁹ cfu/mL.
3- *R. leguminosarum* was inoculated (with a concentration of 2.5x10⁸ cfu/mL in a solid formulation) mixed with previously sieved humus. The quantity reached 1 kg of biofertilizer per 45 kg of seeds.
4- Combination of treatments 2 and 3.

Following the agrochemical recommendations from the "Instituto de Suelos" (Cuba), each pot was fertilized according to the soil contents of P₂O₅ and K₂O. The carriers used were: Urea, Triple Super Phosphate (TSF) and Potassium Chloride (KCI), for nitrogen, phosphorus and potassium, respectively. Fertilization was applied four days before the planting moment (in the case of phosphorus and potassium) while for Urea, it was applied 15 days after germinating. For the latter cultivation, the amount applied was of 217 kg/ha. Whereas for TSF, and KCI, fertilization topped 11.,5 kg/ha and 60 kg/ha, respectively.

The phenological variants evaluated were the number of leaves every seven days as well as their dry weight (MINAG, 1988. Suelos. Análisis Químico. "Determinación de peso seco, materia orgánica y los índices del grado de acidez". NRAG. 892 y 878, Cuba). The variables were statistically evaluated by ANOVA (simple classification). Duncan's multiple comparative test was utilized in order to compare the treatment means (mean values). The statistic package SPSS version 8.0 (1997) was applied resulting in the measurements specified in Table 7.

**Table 7. Results derived from applying the inoculated strains upon the phenological parameters in the cultivation of beans (Phaseolus vulgaris L.).**

| **Treatments** | **Leaves, 36 days** | **Dry weight (%), 43 days** |
|---|---|---|
| Control | 7.0 ^{c} | 5.91 ^{b} |
| C-924 | 12.10 ^{a} | 6.25 ^{ab} |
| *Rhiz. leguminosarum* | 10.60 ^{b} | 6.57 ^{a} |
| C-924+ *Rhiz.* | 10.10 ^{b} | 6.62 ^{a} |

| | | |
|---|---|---|
| Mean with different letters are significantly different among themselves (for each measurement) according to Duncan's multiple ranges test, p ≤ 0.05. | | |

As to the number of leaves, the best results were obtained at day 36 with the application of *T. paurometabola* strain C-924. Significantly differences with the rest of the treatments were clearly shown. In the case where both strains were used, this parameter was similar to the treatment with *R. leguminosarum*, however as to the control, the results were different.

Regarding the dry matter percentage, the greater values were reported for the joined application of both, *T. paurometabola* strain C-924 and the *R. leguminosarum*. However, statistically speaking, it did not differ from the treatments where the biofertilizer was applied and where was not inoculated (Control). This fact is due to the presence of native strains of *R. leguminosarum* in the soil and its positive effect on the growth of the beans cultivation.

### Example 9. Comparison and interaction of T. paurometabola strain C-924 with Azotobacter chroococum and Pseudomonas fluorescens in the cultivation of corn (Zea maiz).

There were five replicas for each treatment and four plants for each replicate. Seeds were planted at a depth of 3 cm, which numbered one seed per bed. Each pot (capacity of 1 L) having four beds. For each experimental pot, 1.2 kg of "Carbonated Brown soil" was used. The latter containing 3.74 % of labile organic matter, (total 14 %), soluble phosphorus of 19.14 mg of P₂O₅/100g of soil (Instituto de Suelos, 1999. "Nueva clasificación genética de los suelos de Cuba". Ministerio de la Agricultura. Editorial AGRINFOR, Cuba).

The experiment was performed in a greenhouse under semi-controlled conditions. The treatments were the following:
1. Control without inoculation.
2*. T. paurometabola* strain C-924: inoculated seven days before planting the seeds and seven day after planting them, according to the field's application requirements. The quantity applied was of 100 mL/pot with a concentration of 1x10⁹ cfu/mL.
3. *A*. *chroococcum* with a concentration of 4.5x10¹⁰ cfu/mL in a solid formulation, mixed with humus previously sieved. The dose used was of 2 kg/ha.
4*. P. fluorecens* with a concentration of 2.7x10¹⁰ cfu/mL in a solid formulation, mixed with humus previously sieved and a dose of 2 kg/ha.
5. Combination of the treatments 2 & 3.
6. Combination of the treatments 2 & 4.

Each pot had its necessary fertilization as required by the soil P₂O₅ and K₂O contents and according to the agrochemical recommendation made by the "Instituto de Suelos" (Cuba). The carriers used were: Urea, Triple Super Phosphate (TSF) and Potassium Chloride (KCI), for nitrogen, phosphorus and potassium, respectively. In the case of phosphorus and potassium, fertilization was applied 4 days before planting the seeds, and for urea, fertilization was applied 15 days after the germinating stage. The corn cultivation had a fertilization applied at rate of 185 kg/ha of urea, 121 kg/ha of TSP and 45 kg/ha of KCI.

The phenological variables evaluated were the stem diameter, the plant height, the number of leaves (counted every seven days), and the dry weight as well (MINAG, 1988. Suelo. Análisis Químico. "Determinación de peso seco, materia orgánica y los índices del grado de acidez". NRAG. 892 y 878, Cuba). Table 8 is a sum of the measurement results.

**Table 8. Resulting data after the application of the inoculated strains over the phenological parameters and the dry matter on the cultivation of corn (Zea maiz L.)**

| **Treatments** | **Stem diameter, 36 days** | **No. of leaves, 36 days** | **Height (cm), 36 days** | **Dry weight (%)** |
|---|---|---|---|---|
| Control | 8.56 ^{b} | 6.30 ^{b} | 69.79 ^{b} | 4.80 ^{b} |
| C-924 | 10.71 ^{a} | 11.70 ^{a} | 77.70 ^{a} | 5,08 ^{a} |
| Azotobacter | 8.84 ^{b} | 6.80 ^{b} | 71.70 ^{ab} | 5.12 ^{a} |
| *Pseudomonas* | 8.69 ^{b} | 6.30 ^{b} | 75.15 ^{ab} | 5.25 ^{a} |
| C-924+*Azot* | 10.09 ^{a} | 7.10 ^{b} | 77.05 ^{a} | 5.10 ^{a} |
| C-924+*Pseud* | 10.70 ^{a} | 7.20 ^{b} | 69.20 ^{b} | 5.16 ^{a} |

| | | | | |
|---|---|---|---|---|
| Mean values with different letters differ significantly among each other according to Duncan's multiple ranges test, p ≤ 0.05. | | | | |

The best values for each of the phenological parameters studied were achieved were *T. paurometabola* strain C-924 was applied, either by itself or in combination with other growth enhancers. As to the number of leaves, the result derived from applying only C-924 was higher, in an statistical manner (Duncan's test, p ≤ 0.05), compared to the rest of the treatments.

The best results in the development of the cultivations during the application of *T. paurometabola* strain C-924 indicate that there are elements additional to the growth of the plants that are due to nitrogenated compounds that are released during the organic matter degradation.

Regarding the dry matter percentage of corn plants, once the studied was completed, it was evident that all the variants inoculated with one or other microorganism show similar values, but always higher than the control not inoculated. This comes to corroborate the efficacy of the studied biofertilizers in the cultivation growth (Haggag. W. M, 2002. Sustainable Agriculture Management of Plant Diseases. Online Journal of Biological Science, 2: 280-284).

### Example 10. Interaction of T. paurometabola strain C-924 with arbuscular mycorrhizas in the cultivation of lettuce (Lactuca sativa).

A "Ferritic Purple Red soil" (Instituto de Suelos, 1999. "Nueva clasificación genética de los suelos de Cuba". Ministerio de la Agricultura. Ed: AGRINFOR, Cuba) was used for this experiment. Said soil contained a 2.9 % of labile organic matter and a 11.8 % of total organic matter, distributed in 1 L capacity pots. Pregerminated lettuce (*Lactuca sativa*) Black Simpson variety seeds were employed.

The strain C-924 was used in the manner of a humectant powder concentrated at a 2x10¹² cfu/mL. It was inoculated seven days before the seed planting, using an aqueous suspension at concentration of 3x10⁷ cfu/mL. A daily adequate irrigation was followed so as not to overreach the soil humidity retention capacity.

The arbuscular mycorrhizas (AM) *Glomus fasciculatum* and *Glomus clarum* previously formulated at the "Instituto Nacional de Ciencias Agrícolas de Cuba". These were applied at the moment of planting the seeds, with a quantity of 200 g/m² (20 g per pot). An experimental design of six treatments with four replicas was used, each of them with 4 lettuce plants. The plants were kept (during 30 days) under semi-controlled conditions in a greenhouse. The treatments were as follow:
- Treatment 1: Soil without inoculation (Control).
- Treatment 2: Soil inoculated with C-924.
- Treatment 3: Soil inoculated with *Glomus fasciculatum* and C-924.
- Treatment 4: Soil inoculated with *Glomus fasciculatum.*
- Treatment 5: Soil inoculated with *Glomus clarum* and C-924.
- Treatment 6: Soil inoculated with *Glomus clarum.*

After 30 day of being planted, the fresh foliage weight for each plant was checked in all the treatments. Table 9 shows a summary of the results.

Treatments in which *T. paurometabola* strain C-924 was involved were significantly better than the Control (Soil without inoculation). For both cases, the combination of *T. paurometabola* strain C-924 + *G. clarum.* and *T. paurometabola* strain C-924 + *G. fasciculatum* showed superior outcome than those treatments were the same AM was applied by separate. This was regarding to the increase of the plants foliage weight.

**Table 9. Comparison of the weight mean values of the aerial part of lettuce plants in each treatment.**

| **Treatments** | **Plants foliage weight (g)** |
|---|---|
| Control | 0.9835 ^{a} |
| C-924 | 13.56425 ^{b} |
| C-924 + *G. fascilulatum* | 23.0545 ^{c} |
| *G. fascilulatum* | 17.2235 ^{b} |
| C-924 + *G. clarum* | 29.503 ^{d} |
| *G. clarum* | 25.30975 ^{c} |

| | |
|---|---|
| Mean values with different letters presented significantly statistical differences, p ≤ 0.05 (Tukey). | |

### Example 11. Compatibility trials between T. paurometabola strain C-924 and G. fasciculatum in cucumber (Cucumis sativus. var. Poinset) cultivated in greenhouses.

Two greenhouses with a "Non Carbonated Brown Soil" (Instituto de Suelos, 1999. Nueva clasificación genética de los suelos de Cuba. Ministerio de la Agricultura. Editorial AGRINFOR, Cuba) were available. The said soil had a content of 3.1 % of labile organic matter and a total organic matter of 12.3 %. An experimental design with equal sized plots (30m²) was made; four treatments with four replicas were carried out in the following way:
- Treatment 1: Soil inoculated t with *Glomus fasciculatum* and C-924.
- Treatment 2: Soil inoculated with *Glomus fasciculatum.*
- Treatment 3: Soil inoculated with C-924.
- Treatment 4: Soil with no inoculation at all (Control).

The strain C-924 and the AM were applied seven days before planting the seeds and in two other moments at intervals of 21 days after its first application, according to the doses required per m², as applied in Example 10. The yielding (weight) of the commercial fruits harvested were evaluated during the cultivation cycle (98 days) for each treatment. The results can be seen in Table 10.

In reference to the Control group, a significant increase of the fruits weight was achieved for the plants under *T. paurometabola* strain C-924 treatment as well as those treated with *Glomus fasciculatum.* Moreover, the combined application of the microorganisms resulted in a greater fruits weight as compared to the application by separate. This difference proved to be statistically significant.

**Table 10. Behavior of the yielding in greenhouses with combined application of C-924 and the mycorrhizogenic fungus G. fasciculatum.**

| **Treatments** | **Mean weight of the fruits per plots (kg).** |
|---|---|
| *G. fasciculatum* + C-924 | 501.5 ^{a} |
| *Glomus fasciculatum* | 448.5 ^{b} |
| *T. paurometabola* cepa C-924 | 443.0 ^{b} |
| Control | 303.5 ^{c} |

| | |
|---|---|
| Mean values with different letters presented significant differences, p ≤ 0.05 (Tukey) | |

## Claims

1. A biofertilizer composition for stimulating the growth and the phenological development of plants, wherein said composition comprises at least, one strain of *Tsukamurella paurometabola*, one mutant derived from it or one metabolite derived from that strain in an appropriate carrier, wherein said composition comprises an effective amount in the range from 10⁷ to 5.0x10¹² colony forming units (cfu) of *Tsukamurella paurometabola* per milliliter or gram of culture medium.

2. A biofertilizer composition according to claim 1 wherein said *Tsukamurella paurometabola* strain is strain C-924.

3. A biofertilizer composition according to claim 2, wherein the effective amount of strain C-924 of *Tsukamurella paurometabola* in the composition is in the range from 10⁹ to 10¹² colony forming units (cfu) per milliliter or gram of culture medium.

4. A biofertilizer composition according to any one of claims 1-3 wherein the metabolite is obtained by a natural, recombinant or synthetic way.

5. A biofertilizer composition according to any one of claims 1-4 wherein the carrier is an organic fertilizer, a pre-packed soil, a seed coating, a powder, a granulate, a nebulizer, a suspension, or a liquid, or any of these variants in an encapsulated form.

6. A biofertilizer composition according to any one of claims 1-5 wherein said strain of *Tsukamurella paurometabola* is combined or mixed with other biofertilizer micro-organisms, such as *Bacillus subtilis, Rhizobium leguminosarum, Azotobacter chroococcum, Pseudomonas fluorescens, Glomus fasciculatum* and *Glomus clarum*, or a mutant derived from such organisms, as well as any active principle or metabolite obtained from said strains by a natural, recombinant or synthetic way, in an appropriate carrier.

7. A method for stimulating the growth of plants, comprising:
a) providing a biofertilizer agent that comprises a culture of one strain of *Tsukamurella paurometabola* or a metabolite derived from this strain obtained by natural, recombinant or a synthetic way.
b) contacting the soil, or a natural or artificial substrate with an effective amount of said biofertilizer agent or the metabolite derived from said strain, wherein said effective amount is in the range from 10⁶ to 5.0x10¹² colony forming units (cfu) of *Tsukamurella paurometabola* per milliliter or gram of culture medium.

8. A method for stimulating the growth of plants according to claim 7 **characterized in that** the strain of *Tsukamurella paurometabola* is strain C-924.

9. A method for stimulating the growth of plants according to claim 7 or 8 **characterized in that** the effective amount of the biofertilizer agent to be applied to the soil, or substrate in an aqueous suspension is in a concentration of approximately between 10⁶ and 10⁹ cfu per milliliter of suspension.

10. A method for stimulating the growth of plants according to claim 9 **characterized in that** the biofertilizer agent is applied at least once to the soil, or mixed with the substrate.

## Patentansprüche

1. Biodüngerzusammensetzung zur Anregung des Wachstums und der phänologischen Entwicklung von Pflanzen, wobei die Zusammensetzung mindestens einen Stamm von *Tsukamurella paurometabola,* eine davon abgeleitete Mutante oder einen von diesem Stamm abgeleiteten Metaboliten in einem geeigneten Träger umfasst, wobei die Zusammensetzung eine wirksame Menge im Bereich von 10⁷ bis 5.0 x 10¹² koloniebildenden Einheiten (KbE) von *Tsukamurella paurometabola* pro Milliliter oder Gramm Kulturmedium umfasst.

2. Biodüngerzusammensetzung nach Anspruch 1, wobei der *Tsukamurella paurometabola* Stamm der Stamm C-924 ist.

3. Biodüngerzusammensetzung nach Anspruch 2, wobei die wirksame Menge von Stamm C-924 von *Tsukamurella paurometabola* in der Zusammensetzung im Bereich von 10⁹ bis 10¹² koloniebildenden Einheiten (KbE) pro Milliliter oder Gramm Kulturmedium ist.

4. Biodüngerzusammensetzung nach einem der Ansprüche 1-3, wobei der Metabolit auf einem natürlichen, rekombinanten oder synthetischen Weg erhalten wird.

5. Biodüngerzusammensetzung nach einem der Ansprüche 1-4, wobei der Träger ein biologischer Dünger, ein vorgepackter Boden, eine Saatgutbeschichtung, ein Pulver, ein Granulat, ein Zerstäuber, eine Suspension oder eine Flüssigkeit oder eine beliebige dieser Varianten in einer eingekapselten Form ist.

6. Biodüngerzusammensetzung nach einem der Ansprüche 1-5, wobei der Stamm von *Tsukamurella paurometabola* kombiniert oder gemischt wird mit anderen Biodünger-Mikroorganismen wie beispielsweise *Bacillus subtilis, Rhizobium leguminosarum, Azotobacter chroococcum, Pseudomonas fluorescens, Glomus fasciculatum* und *Glomus clarum* oder einer von solchen Organismen abgeleiteten Mutante sowie einem beliebigen aktiven Wirkstoff oder Metaboliten, erhalten von den Stämmen auf einem natürlichen, rekombinanten oder synthetischen Weg, in einem geeigneten Träger.

7. Verfahren zur Anregung des Wachstums von Pflanzen, umfassend:
a) das Bereitstellen eines Biodüngemittels, das eine Kultur von einem Stamm von *Tsukamurella paurometabola* oder einem von diesem Stamm abgeleiteten Metaboliten, erhalten auf natürlichem, rekombinanten oder synthetischen Weg, umfasst,
b) das in Kontakt bringen des Bodens oder eines natürlichen oder künstlichen Substrats mit einer wirksamen Menge des Biodüngemittels oder des von dem Stamm abgeleiteten Metaboliten, wobei die wirksame Menge im Bereich von 10⁶ bis 5.0 x 10¹² koloniebildenden Einheiten (KbE) von *Tsukamurella paurometabola* pro Milliliter oder Gramm Kulturmedium ist.

8. Verfahren zur Anregung des Wachstums von Pflanzen nach Anspruch 7, **dadurch gekennzeichnet, dass** der Stamm von *Tsukamurella paurometabola* der Stamm C-924 ist.

9. Verfahren zur Anregung des Wachstums von Pflanzen nach Anspruch 7 oder 8, **dadurch gekennzeichnet, dass** die wirksame Menge des Biodüngemittels, das auf dem Boden anzuwendenden ist oder des Substrats in einer wässrigen Suspension in einer Konzentration von ungefähr zwischen 10⁶ und 10⁹ KbE pro Milliliter Suspension ist.

10. Verfahren zur Anregung des Wachstums von Pflanzen nach Anspruch 9, **dadurch gekennzeichnet, dass** das Biodüngermittel mindestens einmal auf den Boden angewendet oder mit dem Substrat gemischt wird.

## Revendications

1. Composition biofertilisante destinée à stimuler la croissance et le développement phénologique des plantes, ladite composition comprenant au moins une souche de *Tsukamurella paurometabola,* un mutant dérivé de celle-ci ou un métabolite dérivé de cette souche dans un support approprié, ladite composition comprenant une quantité efficace dans la plage de 10⁷ à 5,0 x 10¹² unités formant colonies (ufc) de *Tsukamurella paurometabola* par millilitre ou gramme de milieu de culture.

2. Composition biofertilisante selon la revendication 1 dans laquelle ladite souche de *Tsukamurella paurometabola* est la souche C-924.

3. Composition biofertilisante selon la revendication 2, dans laquelle la quantité efficace de la souche C-924 de *Tsukamurella paurometabola* dans la composition est dans la plage de 10⁹ à 10¹² unités formant colonies (ufc) par millilitre ou gramme de milieu de culture.

4. Composition biofertilisante selon l'une quelconque des revendications 1 à 3 dans laquelle le métabolite est obtenu par un moyen naturel, recombinant ou synthétique.

5. Composition biofertilisante selon l'une quelconque des revendications 1 à 4 dans laquelle le support est un engrais organique, un sol préemballé, un enrobage de semences, une poudre, un granulé, un nébulisateur, une suspension ou un liquide, ou l'une quelconque de ces variantes sous une forme encapsulée.

6. Composition biofertilisante selon l'une quelconque des revendications 1 à 5 dans laquelle ladite souche de *Tsukamurella paurometabola* est combinée ou mélangée avec d'autres micro-organismes biofertilisants, tels que *Bacillus subtilis, Rhizobium leguminosarum, Azotobacter chroococcum, Pseudomonas fluorescens, Glomus fasciculatum* et *Glomus clarum,* ou un mutant dérivé de tels organismes, ainsi que tout principe actif ou métabolite obtenu à partir desdites souches par un moyen naturel, recombinant ou synthétique, dans un support approprié.

7. Procédé destiné à stimuler la croissance des plantes, comprenant :
a) l'apport d'un agent biofertilisant qui comprend une culture d'une souche de *Tsukamurella paurometabola* ou d'un métabolite dérivé de cette souche obtenu par un moyen naturel, recombinant ou synthétique.
b) la mise en contact du sol ou d'un substrat naturel ou artificiel avec une quantité efficace dudit agent biofertilisant ou du métabolite dérivé de ladite souche, dans lequel ladite quantité efficace est dans la plage de 10⁶ à 5,0 x 10¹² unités formant colonies (ufc) de *Tsukamurella paurometabola* par millilitre ou gramme de milieu de culture.

8. Procédé destiné à stimuler la croissance des plantes selon la revendication 7 **caractérisé en ce que** la souche de *Tsukamurella paurometabola* est la souche C-924.

9. Procédé destiné à stimuler la croissance des plantes selon la revendication 7 ou la revendication 8 **caractérisé en ce que** la quantité efficace de l'agent biofertilisant à appliquer sur le sol ou le substrat dans une suspension aqueuse est en une concentration située environ entre 10⁶ et 10⁹ ufc par millilitre de suspension.

10. Procédé destiné à stimuler la croissance des plantes selon la revendication 9 **caractérisé en ce que** l'agent biofertilisant est appliqué au moins une fois sur le sol, ou mélangé avec le substrat.
